# DEMANDE DE BREVET EUROPEEN

(11) **EP 2 541 874 A1**
(43) Date de publication de la demande: **02.01.2013**
(21) Numéro de dépôt: 12173462.8
(22) Date de dépôt: 25.06.2012
(51) Int. Cl.: H04L 29/08

(54) **Procédé et système de communication au sein d?une communauté hétérogène d?utilisateurs.**

(30) Priorité: 30.06.2011 FR 1155918
(71) Demandeur: FRANCE TELECOM, 75015 Paris (FR)
(72) Inventeur: Courval, Lionel, 14210 AMAYE SUR ORNE (FR); Benoit, Mathieu, 78180 MONTIGNY-LE-BRETONNEUX (FR); Labranche, Miguel, 94380 BONNEUIL SUR MARNE (FR); Zimmermann, Julien, 14460 COLOMBELLES (FR)
(74) Mandataire: Saint-Marc-Etienne, Christophe Andréas

(57) **Abrégé**

L'invention concerne un procédé incluant :
. une étape de mise à disposition d'une interface HMI permettant à un gestionnaire CMG d'une communauté Coml d'utilisateurs d'identifier des membres de cette communauté, chaque membre MBi (pour i=l à n) étant associé avec au moins un identifiant IdTi d'un moyen de communication Ti qui lui est propre,
. une étape de sélection, par le gestionnaire de la communauté CMG, d'un ensemble de services de communication CSp destinés à être mis en oeuvre au sein de la communauté Com1, et
. une étape de configuration d'une infrastructure de communication CINF apte à permettre la mise en oeuvre des services sélectionnés CSp.

L'interface HMI permet au gestionnaire CMG à la fois d'identifier les membres de la communauté et de sélectionner aisément différents services de communication qui seront mis en oeuvre au sein de la communauté grâce à une configuration automatique de l'infrastructure de communication CINF réalisée sur la base de la sélection opérée par le gestionnaire CMG *via* l'interface HMI.

## Description

### 1. Domaine de l'invention

L'invention concerne un procédé de communication au sein d'une communauté d'utilisateurs, qui peuvent aussi bien être des humains que des machines.

De tels procédés sont par exemple couramment utilisés pour permettre à un groupe de personnes prenant part à un même projet ou à un même événement d'entretenir entre elles des relations privilégiées dans un cadre spécialement dédié à ce groupe en vue de favoriser un échange d'informations aussi efficace que possible au sein de ce groupe.

### 2. Art antérieur

Dans l'état actuel de la technique, il existe essentiellement deux types de processus pour créer une communauté au sens du paragraphe introductif :
- Soit la communauté est créée par un gestionnaire de communauté qui recense lui-même les différents membres qu'il souhaite inclure dans cette communauté, en association avec lesquels il indique au moins un identifiant d'au moins un terminal dont dispose chaque membre, auquel cas les modes de communication internes à la communauté étant alors limités à la mise en oeuvre des terminaux dont le gestionnaire connaît à la fois la nature et les identifiants, hormis dans des cas où tous les membres de la communauté relèvent d'un même opérateur de télécommunication, qui pourra aider à enrichir la liste des moyens de communication initialement dressée par le gestionnaire de la communauté.
- Soit la communauté est créée par un gestionnaire de communauté qui en annonce ensuite l'existence, après quoi toute personne aspirant à devenir membre de cette communauté devra spontanément se manifester auprès du gestionnaire en lui communiquant au moins un identifiant d'au moins un terminal dont le membre aspirant dispose, auquel cas les modes de communication internes à la communauté sont alors potentiellement élargis à la mise en oeuvre de terminaux dont le gestionnaire de communauté ignorait l'existence avant que les membres ne se manifestent auprès de lui. Un tel élargissement requiert cependant un effort de la part des membres de la communauté, que certaines personnes pourront être réticentes à consentir, ce qui risque de priver la communauté de la contribution de certains membres dont la présence au sein de la communauté aurait pourtant été utile, voire parfois nécessaire.

### 3. Objectifs de l'invention

Il existe ainsi un besoin pour un procédé permettant de créer aussi aisément que possible une communauté d'utilisateurs au sein de laquelle seront rendus disponibles des modes de communications dont le gestionnaire de la communauté pourra avoir ignoré la disponibilité au moment où il a créé cette communauté, quand bien même les membres de la communauté ne relèveraient pas tous d'un même opérateur de télécommunication.

### 4. Exposé de l'invention

A cet effet, selon un aspect fonctionnel, l'invention concerne un procédé conforme au paragraphe introductif, incluant :
. une étape de mise à disposition d'une interface permettant à un gestionnaire d'une communauté d'utilisateurs d'identifier des membres de cette communauté, chaque membre étant associé avec au moins un identifiant d'un moyen de communication qui lui est propre,
. une étape de sélection, par le gestionnaire de la communauté, d'un ensemble de services de communication destinés à être mis en oeuvre au sein de la communauté, et
. une étape de configuration d'une infrastructure de communication apte à permettre la mise en oeuvre des services sélectionnés.

L'invention permet à un gestionnaire de constituer aisément une communauté et de l'équiper de moyens de communication spécifiques au travers d'une unique interface, assurant ainsi à ce gestionnaire un grand confort d'usage. En outre, l'invention permet la création d'une communauté sans pour autant que ses membres n'aient à faire l'effort de s'y inscrire eux-mêmes, seul le gestionnaire ayant à accomplir les formalités d'inscription.

Par ailleurs, l'infrastructure de communication qui sera spécialement configurée en fonction des commandes du gestionnaire permettra d'inclure dans la communauté des membres qui pourront dépendre de différents opérateurs entre lesquels l'infrastructure de communication assurera des liaisons de façon transparente à la fois pour les membres et pour le gestionnaire, ce qui accroît encore le confort d'usage du procédé conforme à l'invention.

De plus, le fait que les communications internes à la communauté transitent par une infrastructure de communication propre à cette communauté permet de réaliser une facturation spécifique des communications relatives à cette communauté, et d'imputer alors cette facturation à un compte propre à la communauté au lieu de facturer aux divers membres concernés les communications qu'ils auront eues dans le cadre de leurs activités liées à la communauté.

Selon un mode de mise en oeuvre particulier de l'invention, un procédé tel que décrit ci-dessus inclut une étape de transmission vers chacun des membres identifiés par le gestionnaire de la communauté d'un message de notification informant ledit membre de la création de la communauté.

Ce mode de mise en oeuvre permet à chaque utilisateur désigné comme membre par le gestionnaire de communauté de valider son appartenance à cette communauté, et pourra optionnellement donner en outre audit gestionnaire la possibilité de communiquer en réponse des informations qui pourront faciliter les échanges entre chaque utilisateur désigné et les autres membres de la communauté, comme par exemple des informations de profil.

Selon une première variante de ce mode de mise en oeuvre particulier de l'invention, un procédé tel que décrit ci-dessus inclut une étape d'émission par au moins un membre de la communauté d'un accusé de réception de la notification, accompagné d'au moins un identifiant correspondant à un moyen de communication distinct de celui vers lequel le message de notification a été émis.

Cette variante permet à chaque utilisateur d'enrichir la liste des services de communication qu'il sera possible de mettre en oeuvre, en vue de faciliter et d'améliorer les relations entre cet utilisateur et les autres membres de la communauté.

Selon une deuxième variante de ce mode de mise en oeuvre particulier de l'invention, un procédé tel que décrit plus haut inclut une étape d'émission par au moins un membre de la communauté d'un accusé de réception de la notification, accompagné d'une requête d'attribution d'une identité virtuelle spécifiquement associée à la communauté.

Grâce à cette deuxième variante, un membre de la communauté qui en aura fait la requête pourra n'être connu des autres membres de la communauté que par une identité distincte de son identité réelle, et uniquement valable dans le contexte des échanges au sein de la communauté. Ainsi, s'il choisit de quitter la communauté, ce membre ne sera en principe plus joignable par les autres membres de la communauté, sauf si ce membre décide de leur transmettre son identité réelle.

Dans certains modes de mise en oeuvre de l'invention, chaque membre pourra choisir lui-même son identité virtuelle. Dans d'autres modes de mise en oeuvre, chaque identité virtuelle sera générée automatiquement et sera ensuite communiquée au membre qui en a fait la requête.

Selon une troisième variante de ce mode de mise en oeuvre particulier de l'invention, un procédé tel que décrit plus haut inclut :
. une étape d'attribution à chaque membre de la communauté d'une identité virtuelle spécifiquement associée à cette communauté, et
. une étape de transmission vers chacun des membres identifiés par le gestionnaire de la communauté d'un message de notification informant ledit membre de la création de la communauté, d'une part, et de l'identité virtuelle qui lui a été attribuée, d'autre part.

Selon cette troisième variante, tout membre se voit automatiquement attribuer une identité virtuelle spécifiquement associée à la communauté, sans qu'il ait à en faire la requête.

Selon un premier aspect matériel, l'invention concerne également un système de communication incluant :
. des moyens de mise à disposition d'une interface permettant à un gestionnaire d'une communauté d'utilisateurs d'identifier des membres de cette communauté, chaque membre étant associé avec au moins un identifiant d'un moyen de communication qui lui est propre, et de sélectionner un ensemble de services de communication destinés à être mis en oeuvre au sein de la communauté, et
. des moyens de configuration d'une infrastructure de communication apte à permettre la mise en oeuvre des services sélectionnés.

Selon un mode de réalisation particulièrement avantageux, un système tel que décrit ci-dessus incluant des moyens de transmission vers chacun des membres identifiés par le gestionnaire de la communauté d'un message de notification informant ledit membre de la création de la communauté, lesdits messages de notification présentant des formats automatiquement adaptés à des capacités propres aux différents terminaux des membres de la communauté.

Une telle adaptation de format sera par exemple obtenue en mettant en oeuvre des réseaux de communication conformes à l'architecture IMS, abréviation de l'appellation anglaise « IP Multimedia Subsystem » bien connue de l'homme du métier.

Selon un deuxième aspect matériel, l'invention concerne également, en tant que moyen utile à sa mise en oeuvre, un programme d'ordinateur **caractérisé en ce qu'**il comprend des instructions de code de programme pour la mise en oeuvre d'un procédé tel que décrit plus haut lorsque ce programme est exécuté par un processeur.

### 5. Liste des figures

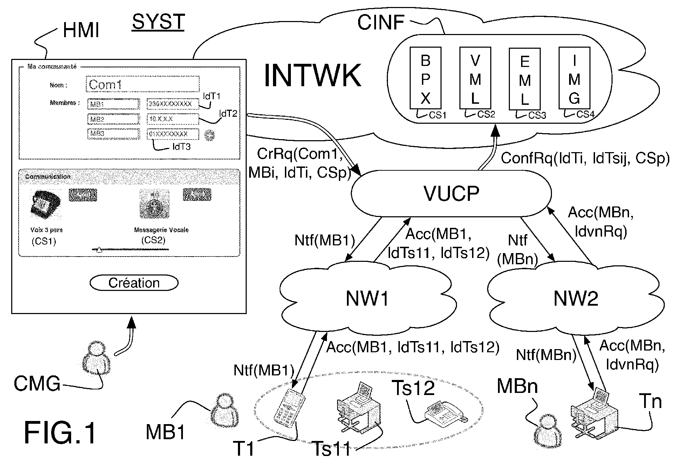

D'autres caractéristiques et avantages de l'invention apparaîtront plus clairement à la lecture de la description suivante d'un mode de réalisation particulier, donné à titre de simple exemple illustratif et non-limitatif, et de la **FIG.1** qui est un diagramme fonctionnel représentant un système de communication dans lequel l'invention est mise en oeuvre.

### 6. Description d'un mode de réalisation de l'invention

### 6.1 Principe général

Le principe général de l'invention repose sur la mise à disposition, à un gestionnaire d'une communauté d'utilisateurs, d'une interface permettant à ce gestionnaire à la fois d'identifier les membres de la communauté et de sélectionner aisément différents services de communication à mettre en oeuvre au sein de la communauté, une telle mise en oeuvre étant rendue possible grâce à une configuration d'une infrastructure de communication réalisée automatiquement sur la base de la sélection opérée par le gestionnaire *via* l'interface.

### 6.2 Description d'un mode de réalisation

La **FIG.1** illustre un système de communication SYST incluant des moyens de mise à disposition d'une interface HMI permettant à un gestionnaire CMG d'une communauté Com1 d'identifier des membres MBi (pour i=1 à n) de cette communauté Com1, chacun en association avec au moins un identifiant IdTi d'un moyen de communication Ti qui lui est propre, et de sélectionner un ensemble de services de communication CSp (pour p=1 à 4 dans cet exemple) destinés à être mis en oeuvre au sein de la communauté Com1.

Dans le mode de mise en oeuvre de l'invention décrit ici, l'interface HMI est mise à disposition sur un portail d'un réseau INTWK, par exemple un réseau conforme au protocole Internet.

Le système SYST conforme à l'invention inclut en outre des moyens de configuration d'une infrastructure de communication CINF apte à permettre la mise en oeuvre des services CSp sélectionnés.

Lorsque le gestionnaire CMG a défini la communauté Com1 et souhaite que cette communauté devienne opérationnelle, une requête de création CrRq(Com1, MBi, IdTi, CSp) est transmise *via* le réseau INTWK à un module de pilotage de communauté VUCP, qui pourra être centralisé ou distribué au sein du réseau INTWK.

Le module de pilotage de communauté VUCP transmet alors des messages de notification Ntf(MBi) (pour i=1 à n) à destination des membres MBi de la communauté Com1 tels qu'identifiés par le gestionnaire CMG, informant ses membres MBi de la création de la communauté Com1.

Dans l'exemple décrit ici, le membre MB1 relève d'un premier opérateur de télécommunications disposant d'un premier réseau de communication NW1, tandis que le membre MBn relève d'un deuxième opérateur de télécommunications disposant d'un deuxième réseau de communication NW2, ce qui est parfaitement transparent pour le gestionnaire de communauté CMG du fait que le module de pilotage de communauté VUCP constitue en quelque sorte une surcouche d'interface entre le réseau Internet INTWK et les premier et deuxième réseaux de communication NW1 et NW2.

Les messages de notification Ntf(MBi) (pour i=1 à n) présenteront de préférence des formats automatiquement adaptés à des capacités propres aux différents terminaux des membres de la communauté. Une telle adaptation de format sera par exemple obtenue en mettant en oeuvre des réseaux de communication NW1 et NW2 conformes à l'architecture IMS, abréviation de l'appellation anglaise « IP Multimedia Subsystem » bien connue de l'homme du métier. En fonction de la nature des différents terminaux Ti, ces messages de notification Ntf(MBi) (pour i=1 à n) pourront par exemple être constitués par des messages de type SMS, MMS, e-mail, etc.

En réponse au message de notification Ntf(MBn), le membre MBn émet alors un accusé de réception Acc(MBn,IdvnRq) vers le module de pilotage de communauté VUCP en vue de signifier au gestionnaire de communauté CMG son accord pour appartenir à la communauté. Cet accusé de réception Acc(MBn,IdvnRq) pourra par exemple avantageusement reprendre le format du message de notification Ntf(MBn), ce qui évitera au membre MBn d'avoir à procéder à des manipulations spécifiques, comme un téléchargement d'une application particulière, avant d'être en mesure de répondre à la notification Ntf(MBn).

Dans le mode de mise en oeuvre de l'invention décrit ici, l'accusé de réception Acc(MBn, IdvnRq) inclut une requête d'attribution IdvnRq d'une identité virtuelle spécifiquement associée à la communauté, par exemple un numéro de téléphone ou une adresse de courrier électronique distincts qui seront différents de ses numéro de téléphone et adresse réels, le module de pilotage de communauté VUCP étant capable de faire le lien de façon transparente entre identités virtuelles et identités réelles.

Le membre MBn ne sera ainsi connu des autres membres de la communauté Com1 que par son identité virtuelle Idvn, qui est distincte de son identité réelle, et uniquement valable dans le contexte des échanges au sein de la communauté Com1. Ainsi, s'il choisit de quitter la communauté Com1, ce membre MBn ne sera en principe plus joignable par les autres membres de la communauté, sauf bien sûr si ce membre MBn décide de leur transmettre son identité réelle.

Dans certains modes de mise en oeuvre de l'invention, chaque membre MBi (pour i=1 à n) pourra choisir lui-même son identité virtuelle Idvi. Dans d'autres modes de mise en oeuvre, chaque identité virtuelle Idvi sera générée automatiquement après que le membre MBi en aura fait la requête.

Selon un autre mode de mise en oeuvre de l'invention, tout membre MBi (pour i=1 à n) se verra automatiquement attribuer une identité virtuelle Idvi spécifiquement associée à la communauté Com1, et ce dès la création de la communauté, sans que ses membres n'aient à en faire la requête.

Dans l'exemple décrit ici, le membre MB1 possède deux terminaux Ts11 et Ts12 en supplément du terminal T1 muni de l'identifiant IdT1 vers lequel le module de pilotage de communauté VUCP a envoyé le message de notification Ntf(MB1). Le membre MB1 transmet avec son accusé de réception du message de notification Ntf(MB1), des identifiants IdTs11 et IdTs12 de ces terminaux supplémentaires Ts11 et Ts12, en vue de les faire inclure dans les moyens de communication pouvant être mis en oeuvre au sein de la communauté. Ces identifiants sont mémorisés au sein du module de pilotage de communauté VUCP en vue d'être exploités par une infrastructure de communication CINF apte à mettre en oeuvre les services de communication CSp (pour p=1 à 4 dans cet exemple) sélectionnés par le gestionnaire de communauté CMG.

En effet, après exécution du processus de notification et d'accusé de réception décrit ci-dessus, lorsque le gestionnaire de communauté CMG a achevé la sélection des services de communication CSp (pour p=1 à 4) destinés à être mis en oeuvre au sein de la communauté Com1, le module de pilotage de communauté VUCP transmet une requête de configuration ConfRq(IdTi, IdTsij, CSp) à l'infrastructure de communication CINF, laquelle requête incluant, outre des identifiants des services CSp concernés, les identifiants IdTi de tous les terminaux mentionnés par le gestionnaire de communauté CMG lors de la création de la communauté Com1, ainsi que les identifiants IdTsij des terminaux supplémentaires TSij dont disposent les membres MBi (pour i=1 à à n).

Dans l'exemple représenté ici, l'infrastructure de communication CINF inclut un dispositif de type PBX apte à gérer divers types de communications vocales entre membres de la communauté, dont un service de conférence à trois CS1 sélectionné par le gestionnaire CMG, un serveur de messagerie vocale VML assurant le service de messagerie CS2 sélectionné par le gestionnaire CMG, un serveur EML et un serveur IMG respectivement destinés à implémenter des fonctionnalités de courrier électronique et de messagerie instantanée CS3 et CS4 également sélectionnées par le gestionnaire CMG.

## Revendications

1. Procédé de communication incluant :
. une étape de mise à disposition d'une interface (HMI) permettant à un gestionnaire d'une communauté d'utilisateurs d'identifier des membres de cette communauté, chaque membre étant associé avec au moins un identifiant d'un moyen de communication (T1, Tn) qui lui est propre,
. une étape de sélection, via ladite interface, par le gestionnaire de la communauté, d'un ensemble de services de communication destinés à être mis en oeuvre au sein de la communauté,
. une étape de configuration d'une infrastructure de communication (CINF) apte à permettre la mise en oeuvre des services sélectionnés,
. une étape de transmission vers chacun des membres identifiés par le gestionnaire de la communauté d'un message de notification informant ledit membre de la création de la communauté,
. une étape d'attribution à au moins un membre de la communauté d'une identité virtuelle spécifiquement associée à cette communauté, et de notification de l'identité virtuelle à chaque membre auquel une identité virtuelle été attribuée.

2. Procédé de communication selon la revendication 1, incluant une étape d'émission par au moins un membre de la communauté d'un accusé de réception de la notification, accompagné d'au moins un identifiant correspondant à un moyen de communication distinct de celui vers lequel le message de notification a été émis.

3. Procédé de communication selon l'une des revendications 1 ou 2, incluant une étape d'émission par au moins un membre de la communauté d'un accusé de réception du message de notification, accompagné d'une requête d'attribution d'une identité virtuelle spécifiquement associée à la communauté.

4. Procédé de communication selon la revendication 1, incluant:
. une étape d'attribution à chaque membre de la communauté d'une identité virtuelle spécifiquement associée à cette communauté, et
. une étape de transmission vers chacun des membres identifiés par le gestionnaire de la communauté d'un message de notification informant ledit membre de la création de la communauté, d'une part, et de l'identité virtuelle qui lui a été attribuée, d'autre part.

5. Système de communication incluant :
. des moyens de mise à disposition d'une interface permettant à un gestionnaire d'une communauté d'utilisateurs d'identifier des membres de cette communauté, chaque membre étant associé avec au moins un identifiant d'un moyen de communication qui lui est propre, et de sélectionner un ensemble de services de communication destinés à être mis en oeuvre au sein de la communauté, et
. des moyens de configuration d'une infrastructure de communication apte à permettre la mise en oeuvre des services sélectionnés,
. des moyens de transmission vers chacun des membres identifiés par le gestionnaire de la communauté d'un message de notification informant ledit membre de la création de la communauté,
. des moyens d'attribution à au moins un membre de la communauté d'une identité virtuelle spécifiquement associée à cette communauté, et de notification de l'identité virtuelle à chaque membre auquel une identité virtuelle été attribuée.

6. Système de communication selon la revendication 5, incluant des moyens de transmission vers chacun des membres identifiés par le gestionnaire de la communauté d'un message de notification informant ledit membre de la création de la communauté, lesdits messages de notification présentant des formats automatiquement adaptés à des capacités propres aux différents terminaux des membres de la communauté.

7. Programme d'ordinateur **caractérisé en ce qu'**il comprend des instructions de code de programme pour la mise en ceuvre d'un procédé selon l'une quelconque des revendications 1 à 4 lorsque ce programme est exécuté par un processeur.
